# EUROPEAN PATENT APPLICATION

(11) **EP 4 822 489 A1**
(43) Date of publication of application: **14.10.2026**
(21) Application number: 26171141.0
(22) Date of filing: 08.04.2026
(51) Int. Cl.: G06F 1/16

(54) **USER-DEPENDENT DISPLAY PERFORMANCE INTERFACE**

(30) Priority: 09.04.2025 US 202563785758 P; 30.03.2026 US 202619633141
(71) Applicant: Apple Inc., Cupertino, CA 95014 (US)
(72) Inventor: FLEISCHMAN, Dagny, Cupertino, 95014 (US); STERN, Matthew L., Cupertino, 95014 (US)
(74) Representative: COPA Copenhagen Patents

(57) **Abstract**

Various implementations disclosed herein include devices, systems, and methods that enable an application to query a wearable device to determine whether current use of the wearable device by a user satisfies a performance requirement. For example, a process may include receiving a request corresponding to the wearable device satisfying a performance requirement required for an application to perform a function while the wearable device is worn by a user. The process may further obtain device performance data corresponding to a capability of the wearable device while the wearable device is worn by the user. The process may further provide a response to the request based on the performance requirement and the device performance data. The response may provide or enable a determination of whether the wearable device will satisfy the performance requirement required for the application to perform the function while the wearable electronic device is worn by a user.

## Description

### TECHNICAL FIELD

The present disclosure generally relates to systems, methods, and devices that enable an application to query a device to determine whether current use of the device by a user satisfies a performance requirement.

### BACKGROUND

Applications have various performance requirements for electronic devices upon which they are executed. For example, an application may require a head-mounted device (HMD) that it is used to provide a current user with at least a minimum field of view (FOV). Existing techniques do not adequately enable such applications to discover device characteristics and/or otherwise ensure that performance requirements will be satisfied.

### SUMMARY

Various implementations disclosed herein include systems, methods, and devices that enable an application to query a wearable device such as a head mounted device (HMD) to determine whether current usage of the wearable device by a user satisfies a user and/or device-specific performance requirement (e.g., visual and/or audio requirements). For example, a medical application may be configured to query an HMD to verify that a user (of the HMD) such as a physician or patient is able to view a specific size FOV on a display of the HMD or a patient is able to maintain a specified stimuli in their peripheral view. In some implementations, a query may be enabled via an interface such as, for example, an application programming interface (API).

In some implementations, a performance requirement may relate to user dependent/specific (e.g., user fit) and/or application-specific (e.g., a medical imaging application) display requirements such as, *inter alia,* FOV requirements, color uniformity requirements, distortion (e.g., related to a FOV) requirements, pixels per degree (PPD) requirements, sharpness requirements, camera characteristic requirements, etc.

In some implementations, a query response may result in a notification indicating that a performance requirement has not been achieved. In some implementations, a query response may be provided by an application and/or the wearable device. In some implementations, a query response may provide an instruction (to a user of the wearable device) to modify the wearable device. In some implementations, a query response may provide instructions related to how to use and/or wear the wearable device. In some implementations, a query response may result in a notification transmitted/shared to a second device monitoring the use of an application on a first device. For example, a patient may use a device such as an HMD to perform a medical test (e.g., an eye/vision test) and another device such as a tablet (i.e., communicating with the HMD) may be used to monitor the test so that the tablet is configured to alert a medical practitioner (using the tablet) that the patient is currently outside of an allowed performance envelope within HMD.

In some implementations, a query response may be configured to provide an indicator presenting a pass/fail indication, calculated values, privacy-preserving representations, etc. For example, a warning may be issued if a user is unable to achieve: a specified field of view (FOV) required by a governing entity, application design specifications, etc.

In some implementations, determining whether a performance requirement is has been achieved may be based on a current positioning of a user relative to a wearable device. For example, an assessment of what is actually visible to a user may be based a current positioning of a user relative to a wearable device, e.g., using a ray tracing model to predict or simulate the light that will propagate from portions of a display of an HMD to a user's eye(s), for example, whether light from a particular pixel or group of pixels will reach a pupil, retina, etc.

In some implementations, a wearable device has a processor (e.g., one or more processors) that executes instructions stored in a non-transitory computer-readable medium to perform a method. The method performs one or more steps or processes. In some implementations, the wearable electronic device receives a request for an application, e.g., receiving a request from an application regarding device state, capabilities, current configuration, position relative to the user, etc. The request may correspond to the wearable electronic device satisfying a performance requirement required for the application to perform a function while the wearable electronic device is worn by a user. In some implementations, device performance data corresponding to a capability of the device while the wearable electronic device is worn by the user is obtained and a response to the request is provided based on the performance requirement and the device performance data. In some implementations, the response provides or enables a determination of whether the wearable electronic device will satisfy the performance requirement required for the application to perform the function while the wearable electronic device is worn by a user.

In accordance with some implementations, a device includes one or more processors, a non-transitory memory, and one or more programs; the one or more programs are stored in the non-transitory memory and configured to be executed by the one or more processors and the one or more programs include instructions for performing or causing performance of any of the methods described herein. In accordance with some implementations, a non-transitory computer readable storage medium has stored therein instructions, which, when executed by one or more processors of a device, cause the device to perform or cause performance of any of the methods described herein. In accordance with some implementations, a device includes: one or more processors, a non-transitory memory, and means for performing or causing performance of any of the methods described herein.

### BRIEF DESCRIPTION OF THE DRAWINGS

So that the present disclosure can be understood by those of ordinary skill in the art, a more detailed description may be had by reference to aspects of some illustrative implementations, some of which are shown in the accompanying drawings.
Figure 1 illustrates an exemplary electronic device operating in a physical environment, in accordance with some implementations.
Figure 2 illustrates a notification framework that leverages sensor data, performance requirements data, and a user/device performance module to enable an application to query a wearable device to determine whether current use of the wearable satisfies a performance requirement, in accordance with some implementations.
Figures 3A and 3B illustrate an environment including views of content provided to a user with respect to a field of view, in accordance with some implementations.
Figures 3C and 3D illustrate visual fidelity API based FOV modes, in accordance with some implementations.
Figure 4 illustrates an exemplary ray tracing model of an optical module of an electrical device, in accordance with some implementations.
Figure 5 is a block diagram of an example system illustrating a user device configured to enable an application to query a wearable device to determine whether current use of the wearable satisfies a user specific performance requirement, in accordance with some implementations.
Figure 6 is a flowchart representation of an exemplary method that enables an application to query a wearable device such as an HMD to determine whether current usage of the HMD by a user satisfies a user/device based performance requirement, in accordance with some implementations.
Figure 7 is an example electronic device in accordance with some implementations.
Figure 8A illustrates a method for calling an application programming interface (API) to obtain and provide information to a system.
Figure 8B illustrates a method for calling an application programming interface (API) to obtain information and perform an corresponding operation.

In accordance with common practice the various features illustrated in the drawings may not be drawn to scale. Accordingly, the dimensions of the various features may be arbitrarily expanded or reduced for clarity. In addition, some of the drawings may not depict all of the components of a given system, method or device. Finally, like reference numerals may be used to denote like features throughout the specification and figures.

### DESCRIPTION

Numerous details are described in order to provide a thorough understanding of the example implementations shown in the drawings. However, the drawings merely show some example aspects of the present disclosure and are therefore not to be considered limiting. Those of ordinary skill in the art will appreciate that other effective aspects and/or variants do not include all of the specific details described herein. Moreover, well-known systems, methods, components, devices and circuits have not been described in exhaustive detail so as not to obscure more pertinent aspects of the example implementations described herein.

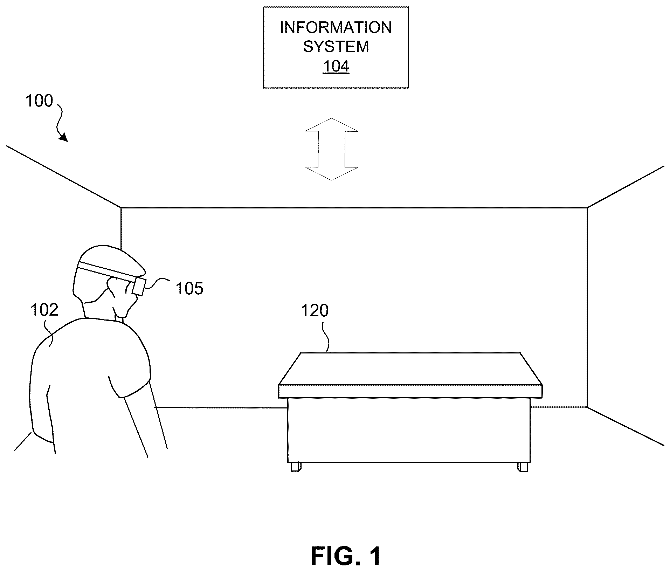

**Figure** 1 illustrates an exemplary electronic device 105 operating in a physical environment 100. Additionally, example environment 100 may include an information system 104 (e.g., a device control framework or network) in communication with electronic device 105. In the example of Figure 1, the physical environment 100 is a room that includes a desk 120. The electronic device 105 may include one or more cameras, microphones, depth sensors, or other sensors that can be used to capture information about and evaluate the physical environment 100 and the objects within it, as well as information about the user 102 of electronic device 105. The information about the physical environment 100 and/or user 102 may be used to provide visual and audio content and/or to identify the current location of the physical environment 100 and/or the location of the user within the physical environment 100.

In some implementations, views of an extended reality (XR) environment may be provided to one or more participants (e.g., user 102 and/or other participants not shown) via electronic device 105 (e.g., a wearable device such as an HMD). Such an XR environment may include views of a 3D environment that is generated based on camera images and/or depth camera images of the physical environment 100 as well as a representation of user 102 based on camera images and/or depth camera images of the user 102. Such an XR environment may include virtual content that is positioned at 3D locations relative to a 3D coordinate system associated with the XR environment, which may correspond to a 3D coordinate system of the physical environment 100.

In some implementations, a request such as a query may be received via an API from an application running on electronic device 105 and/or information system 104. The request may correspond to electronic device 105 (e.g., a wearable device such as an HMD) satisfying a performance requirement(s) required (e.g., by law or governing entity, by device functional requirements, etc.) for the application to perform a function while electronic device 105 is worn by user 102. The performance requirement(s) may include user dependent/specific and/or application-specific requirements such as, for example, FOV required for specific application use. For example, an effective performance of the device may be user-specific based on, *inter alia,* enrollment of eye and/or hands of user 102, active sensing of the eyes of user 102 relative to a display of electronic device 105 (e.g., an HMD), etc.

In some implementations, device performance data may be obtained from, for example, sensors, etc. The device performance data may correspond to a capability of electronic device 105 while the electronic device 105 is being worn by the user 102. The device performance data may include model-specific or device-specific audio/video application and/or user specified characteristics related to, *inter alia,* FOV, distortion, PPD, chromatic aberration, luminance, luminance uniformity, color, color uniformity, sharpness, contrast, virtual image distance, pupil position with respect to a device being worn by user 102, a gaze angle (determined based on sensor data) related to pupil position, interpupillary distance (IPD), known device characteristics, a ray traced model of optical stack between a display of device 105 and eyes of user 102, camera characteristics (image sensor, optics, etc.), etc.

In some implementations, obtaining device performance data may include obtaining and determining based on a current position of the user 102 relative to device 105, characteristics of the user 102 such as whether the user 102 is wearing glasses, etc. In some implementations, obtaining device performance data may include predicting or simulating performance data based on current device and/or user characteristics, a positional relationship between device 105 and user 102, etc.

In some implementations, a response to the request (i.e., query) may be provided based on the performance requirement and the device performance data. In some implementations, the response may provide or enable a determination of whether the electronic device 105 will satisfy the performance requirement required for the application to perform function while the wearable electronic device is worn by a user. In some implementations, the response may include a pass/fail indication, calculated values of the device's current performance capabilities, privacy-preserving representations such as identifying whether a minimum FOV is available without revealing an actual FOV and/or actual user characteristics used to determine the actual FOV, etc. In some implementations, the response may be provided to the requesting application to enable the application to execute an appropriate action such as, *inter alia,* notification to the user 102, preventing or allowing use of the application on the device 105, etc.

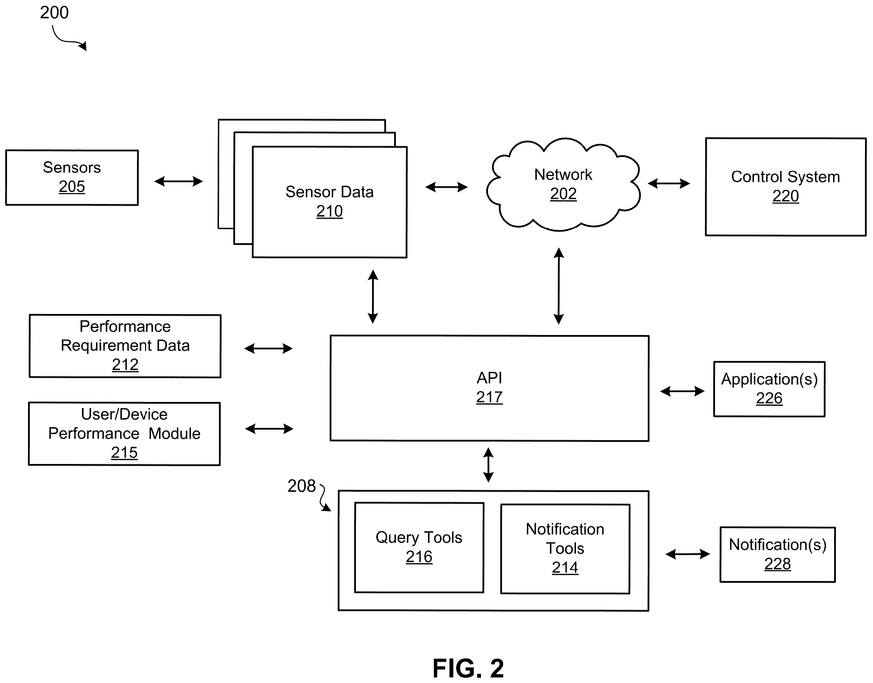

**Figure 2** illustrates a notification framework 200 that leverages sensor data 210 from sensors 205, performance requirements data 212, and a user/device performance module 215 to enable an application(s) 226 to query (via an API 217 and query tools 216) a wearable device such as an HMD (e.g., device 105 of figure 1) to determine whether current use of the wearable device by a user (e.g., user 102 of figure 1) satisfies a user specific performance requirement, in accordance with some implementations. For example, a medical application may be configured to query an HMD to guarantee that a viewer is viewing a specified size field of view (FOV) or that a patient is able to view a specified stimuli within their periphery.

The notification framework 200 includes sensors 205 (e.g., of electronic device 105 of figure 1) such as, *inter alia,* image sensors, inertial measurement unit (IMU) sensors, accelerometers, gyroscopes, etc. Likewise, the notification framework 200 includes sensor data 210, user/device performance module 215, tools/software 208, application(s) 226, an API and a control system 220 that, in some implementations, communicates over a data communication network 202, e.g., a local area network (LAN), a wide area network (WAN), the Internet, a mobile network, or a combination thereof. Components of notification system 200 (e.g., tools/software 208, user/device performance module 215, API 217, and application(s) 226) may be comprised by a wearable device, control system 220 or any combination thereof.

Tools/software 208 comprise query tools 216 and notification tools 212.

In some implementations, API 217 enables application(s) 226 to query (via query tools 216) an HMD (or any type of wearable device) to determine whether a current use (of the HMD) satisfies a set of performance requirements (e.g., obtained from performance requirements data 212). Determining whether a current use (of the HMD) satisfies a set of performance requirements may be applicable with respect to scenarios such as, for example, medical testing, training simulations, high-precision applications, etc. For example, a performance requirement of the device may be user-specific based on, inter alia, enrollment of eye and/or hands of a user, active sensing of the eyes of a user relative to a display of electronic device 105 (e.g., an HMD), etc.

In some implementations, a query (executed via query tools 216) may be configured to evaluate user-dependent and device-specific factors (in real time via user/device performance module 215) with respect to user-specific or application-specific performance requirements being satisfied (e.g., FOV, sharpness, distortion, or stimuli in the periphery). For example, the following application or user-specific visual/audio parameter target metrics may be required to be maintained for optimal performance for specified application usage: (a) FOV metrics such as a minimum acceptable viewing angle; (b) distortion metrics such as a degree of warping allowed across a visual field based on current user positioning and head movement; (c) pixels per degree (PPD) metrics such as, for example, a change in PPD across users gaze, pupil position, etc.; (d) chromatic aberration metrics such as tolerance for color fringing or misalignment; (e) luminance metrics such as a brightness level required for the application/usage; (f) luminance uniformity metrics such as a uniform distribution of brightness across a display of an HMD; (g) color accuracy metrics such as a tolerance for deviations from reference colors; (h) color uniformity metrics such as consistency of color reproduction across an FOV; (i) sharpness metrics such as clarity of displayed details; (j) contrast metrics such as a ratio of light to dark areas indicating display dynamic range; (k) virtual image distance metrics such as a simulated distance from an eye to a perceived image plane; (1) pupil position relative to device metrics such as an alignment of a user's eyes to an optical center of the lenses (m) gaze angle metrics such as a user's line of sight relative to the display, etc.

In some implementations, dynamic user information may be obtained in real time from sensors 205 to enable performance calculations (for query input) such as, *inter alia*: (a) pupil position based on real-time tracking of pupil location relative to a display; (b) gaze direction of a user's gaze relative to an HMD's display center; (c) interpupillary distance (IPD) such as a user-specific distance between pupils, etc.

In some implementations, known device characteristics may be obtained for query input. For example, information associated with an HMD's display and optics such as display resolution and pixel layout, optical lens stack parameters (e.g., lens shape, magnification, etc.), device calibration data, etc.

In some implementations, a ray-tracing model may be used to predict or simulate: (a) light propagation from a display (e.g., pixels) to a user's eyes; (b) light propagation through a particular region of the lens/optic; (c) peripheral visibility to ensure stimuli are displayed properly within required angles; and/or (d) user eye position changes (e.g., as the user adjusts the fit of the HMD).

In some implementations, image sensor specifications (e.g., resolution, color accuracy, noise, etc.) and optics specifications (e.g., focal length, field of view, etc.) may be used for query input.

In some implementations, application(s) 226 may be configured to initiate a query with respect to an HMD via API 217 to determine performance requirements. For example, the query may specify: (a) a metric type (e.g., FOV, sharpness, etc.); (b) application-specific thresholds (e.g., FDA or medical requirements for a specified peripheral vision stimuli) and/or (c) user-dependent thresholds (e.g., ensuring a patient-specific PPD, etc.). In response to the query, API 217 may obtain real-time sensor data (e.g., pupil position, gaze, etc.) and device characteristics such as, for example, (a) a current device position and user eye tracking data; (b) internal and external camera data for FOV and light leakage characteristics; (c) display settings such as resolution, color profile, etc.; and/or (d) lens properties data. Likewise, API 217 and user/device performance module 215 may be configured to simulate optical path characteristics using a ray-traced model to predict visual outcomes for a user's current position by performing pixel to lens mapping, pupil intersection calculations, FOV calculations, PPD determinations, etc. Subsequently, each characteristic may be assessed with respect to the application-specific and/or user-dependent thresholds, for example via a look up table (LUT) approach that pre-maps expected characteristic/performance values for different pixel regions and gaze positions. Subsequently, API 217 may proceed with device-level compensations/instructions. In response to the characteristic assessments, API 217 may provide a detailed response indicating whether the performance requirements have been met. Likewise, notification tools 214 may provide associated notification(s) 228 such as, for example, (a) a pass/fail indication such as a binary pass/fail status provided for each characteristic; (b) calculated values for metrics such as FOV, PPD, luminance, etc.; (d) privacy-preserving representations comprising specified data to protect user privacy (e.g., gaze information); and/or (e) guidance for correction with respect to a characteristic failure such as, for example, "adjust head position or device fit to increase FOV".

In some implementations, notification framework 200 may be implemented with respect to a medical imaging application. For example, notification framework 200 may be enabled to ensure that a user's pupil is centered relative to a lens of an HMD to guarantee diagnostic accuracy. In some implementations, an associated failure may trigger a notification(s) 228 to a supervising practitioner such as a doctor. Likewise, a medical imaging application may require a specific FOV to display peripheral visual stimuli in compliance with FDA regulations and therefore, the application may be configured to query an HMD to ensure a minimum (e.g., 90°) FOV is being achieved by using ray tracing to calculate how much of the display is currently visible to the user's eyes to account for lens distortion and user fit. If the minimum FOV is not achieved (e.g., due to improper positioning or lens issues), the user may be notified to adjust the fit or position of the HMD.

In some implementations, notification framework 200 may be implemented with respect to a training simulator application such that FOV and distortion levels are monitored to ensure that immersive and accurate simulation prompts are provided to the user to adjust the HMD if minimum thresholds aren't achieved.

In some implementations, notification tools 214 may be configured to provide a direct user notification(s) 228 (to a user) such that the user may be directly prompted to perform a function such as adjusting a headset, changing a position, etc. For example, it may be determined that a FOV is too small and in response notification tools 214 may suggest repositioning an HMD to better align a pupil with a display of the HMD. Likewise, it may be determined that a minimum sharpness has not been achieved and in response notification tools 214 may recommend tightening an HMD headband to reduce display movement or adjusting a user distance from a display.

In some implementations, notification tools 214 may be configured to provide an external notification such as alerts being sent to a practitioner or supervisor, etc. In some implementations, notification tools may be configured to provide a visual guide to enable, for example, a user to self-correct HMD positioning.

In some implementations, notification framework 200 may be configured to address privacy and security considerations. For example, privacy-preserving summaries of performance metrics may be used to prevent applications from accessing, for example, raw user eye-tracking data, etc. Likewise, notification framework 200 may be configured to allow users to opt in to performance queries to ensure transparency and control with respect to data being shared.

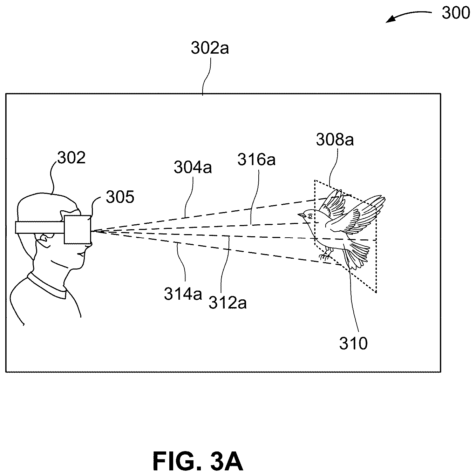

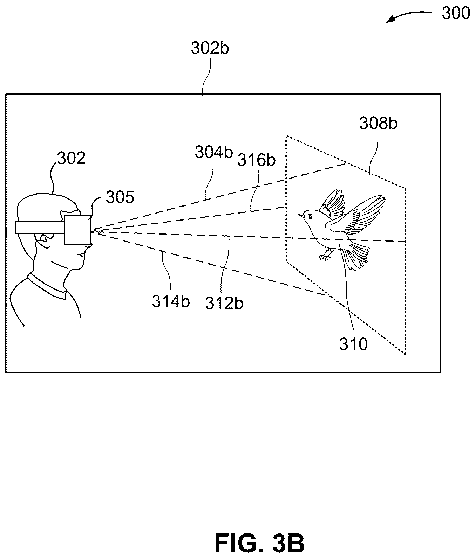

**Figure 3A** illustrates an environment 300 including a view 302a of content 310 provided to a user 302 via an HMD 305. The view 302a includes content 310 (e.g., a bird) rendered such that a current FOV 308a is preventing the user 302 from fully viewing (i.e., a performance requirement has not been satisfied) the content 310 (e.g., FOV 308a is less than a minimum FOV threshold). For example, portions of the content 310 such as a wing portion and a head of a bird are not viewable within the FOV 308a. The FOV 308a is provided based on horizontal FOV projections 304a and 314a forming an angle (between projections 304a and 314a) and vertical FOV projections 316a and 312a forming an angle (projections 316a and 312a). In response, a notification framework (e.g., notification framework 200 of figure 2) is configured to (in response to a query) provide a notification (for user 302) indicating that a performance requirement (i.e., FOV requirement) has not been satisfied. The notification may additionally include instructions to modify operations and/or usage/fit of the HMD 305. In response, user 302 may modify operations and/or usage/fit of the HMD 305 in accordance with the instructions thereby enabling the user 302 to fully view the content 310 (i.e., an FOV size is increased) as described with respect to figure 3B, *infra.* In some implementations, the notification may be transmitted/shared to another device (e.g., a tablet) monitoring the use of an application of HMD 305. For example, a patient may use HMD 305 to perform a medical test (e.g., an eye/vision test) and the tablet may be used to monitor the test so that the tablet is configured to alert, for example, a medical practitioner (using the tablet) that the patient is currently outside of an allowed performance envelope within HMD 305.

**Figure 3B** illustrates environment 300 including a view 302b of content 310 provided to user 302 via HMD 305 subsequent to user 302 modifying operations and/or usage/fit of the HMD 305 in accordance with the instructions as described with respect to figure 3A, *supra.* The view 302a includes content 310 (e.g., a bird) rendered such that a current FOV 308b has been adjusted (in a user specific manner) in accordance with a minimum FOV threshold thereby allowing the user 302 to fully view the content 310 (e.g., all portions of the content 310 are viewable within the FOV 302b). The FOV 308b is provided based on horizontal FOV projections 304b and 314b forming a minimum angle (between FOV projections 304b and 314b) and vertical FOV projections 316b and 312b forming a minimum angle (between FOV projections 316b and 312b).

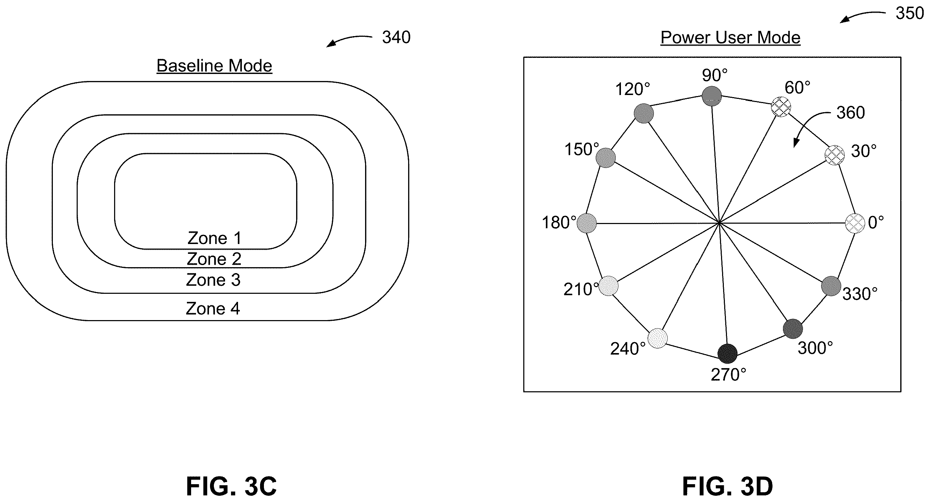

**Figure 3C** illustrates a baseline FOV mode 340 in accordance with some implementations. The baseline FOV mode 340 incorporates a developer-friendly API mode that enables selection of a minimum FOV using preset qualitative zones. For example, the baseline FOV mode 340 enables an API to: (a) present predefined binocular FOV zones (e.g., zone 1- zone 4); (b) allow a developer to select a target zone to enforce; (c) provide in-headset visualizations so a developer may view each zone's coverage; and (d) indicate whether a user's current fit/eye position meets one of zones 1-4. In some implementations, the baseline FOV mode 340 includes the following properties: (a) FOV definition: binocular (b) specification style: zonebased; (c) communication style: in-headset visualization; and (d) zone thresholds: platform-defined.

**Figure 3D** illustrates a power user FOV mode 350, in accordance with some implementations. The power user FOV mode 350 comprises a precision API mode that enables developers to define and enforce a minimum FOV using explicit geometric constraints. For example, the power user FOV mode 350 enables an API to enable developers to define monocular FOV boundaries using rays 360 from a pupil. For example, each ray may include a developer-specified extent in tan-angle space and the rays 360 may be configured to form a polygon representing a minimum acceptable FOV. In some implementations, the power user FOV mode 350 allows an evaluation as to whether the user's current FOV satisfies this polygon and results may be provided via a dashboard view. In some implementations, the power user FOV mode 350 includes the following properties: (a) FOV definition: monocular; (b) Communication style: developer dashboard configured to illustrate angular requirement impact on FOV shape; and (c) zone definition: developer defined rays in tan-angle space.

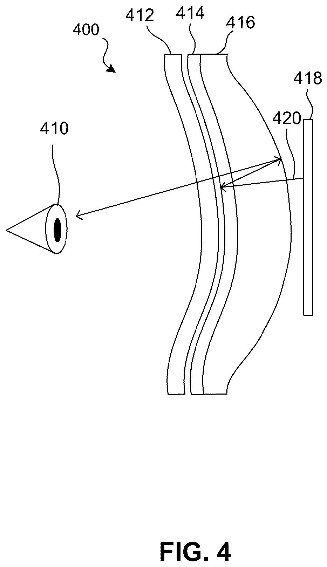

**Figure 4** illustrates an exemplary ray tracing model 400 of an optical module of an electrical device such as, for example, electrical device 305 of figures 3A and 3B. In this example, the model 400 of the optical module includes 3D positions of multiple layers 412, 414, 416 of the optical module as well as 3D positions of a display 418 and an eye/viewpoint 410. The model may further model specific content on the display 418, e.g., by dividing the model of the display into a plurality of rectangular sub-regions having different content (e.g., being bright or dark) corresponding to actual content to be displayed on the display.

The model 400 may be used to model or simulate light paths. For example, a light path 420 may be modeled to travel from the modeled display 418 through layers 416 and 414, bounce back through layers 414 and 416, and then bounce out to reach modeled eye/viewpoint 410.

The model 400 may enable ray tracing across lens zones. For example, since a lens's distortion and magnification properties may be known at every point, the model may enable a system (e.g., notification system 200 of figure 2) to trace light rays from each display pixel, through a user's specific gaze point on a lens, to a pupil. For example, by calculating what part of the lens the user is looking through: (a) an API may be configured to determine if the user is looking through the lens's center (sharper area) or peripheral zones (distorted/magnified); (b) an API may be configured to calculate how pixel density (e.g., perceived PPD) shifts due to magnification differences across the lens; and/or (c) a level of distortion may be determined to be within acceptable bounds based on an application's criteria.

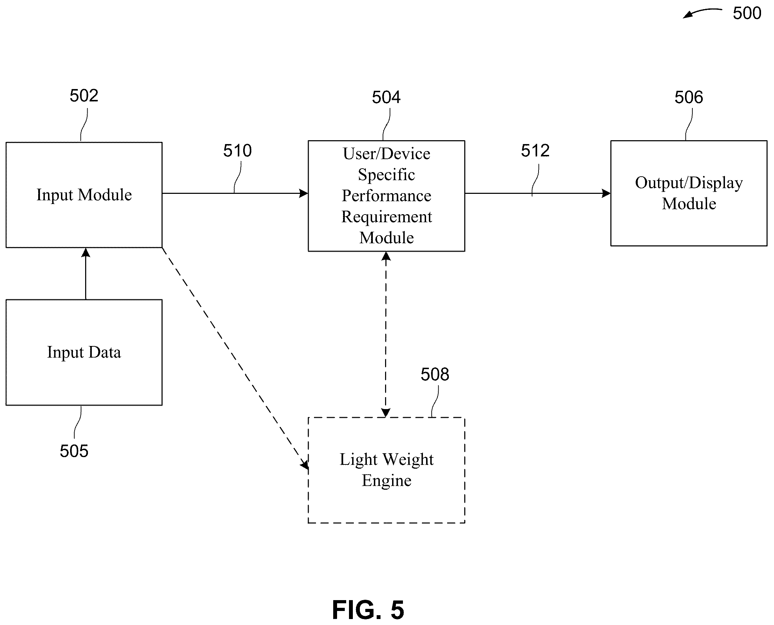

**Figure 5** is a block diagram of an example system illustrating a user device 500 configured to enable an application to query a wearable device to determine whether current use of the wearable satisfies a user/device specific performance requirement. The user device 500 (e.g., a wearable device) may include an input module 502, a user/device performance requirement module 504, an output/display module 506, and a light weight engine 508.

In some embodiments, input module 502 is configured to accept input data 505 (e.g., internal or external sensor data from image sensors, inertial measurement unit (IMU) sensors, accelerometers, gyroscopes, etc. of and/or external to the user device 500) enable performance calculations (for query input) such as, *inter alia*: (a) pupil position based on real-time tracking of pupil location relative to a display; (b) gaze direction of a user's gaze relative to an HMD's display center; (c) interpupillary distance (IPD) such as a user-specific distance between pupils, etc.

Input 510 from input module 502 can be fed to user/device performance requirement module 504. User/device performance requirement module 504 can include one or more learning-based and/or non-learning-based models for perceiving, synthesizing, and inferring information for determining whether current usage of a wearable device by a user satisfies a user and/or device-specific performance requirement and applying a rule-based query response to provide an instruction (to a user of the wearable device) to modify the wearable device. Persons skilled in the art will appreciate that the activity identification module 504 can include any suitable number of rule-based process(es) to generate output 512 based on input 510.

In some embodiments, user/device performance requirement module 504 may be used to deterministically simulate optical path characteristics using a ray-traced model to predict visual outcomes for a user's current position by performing pixel to lens mapping, pupil intersection calculations, FOV calculations, PPD determinations, etc. Subsequently, each characteristic may be assessed with respect to the application-specific and/or user-dependent thresholds, for example via a look up table (LUT) approach that may use a defined rule to pre-map expected characteristic/performance values for different pixel regions and gaze positions.

In some embodiments, user device 500 may optionally elect to use a light weight engine 508 instead of user/device performance requirement module 504 to deterministically simulate optical path characteristics using computer vision techniques and/or algorithmic approaches to predict visual outcomes for a user's current position Subsequently, each characteristic may be assessed with respect to application-specific and/or user-dependent thresholds, for example via a look up table (LUT) approach that may use a defined rule to pre-map expected characteristic/performance values for different pixel regions and gaze positions. The light-weight engine 508 may be a non-learning network.

In some embodiments, output/display module 506 is configured to accept results from user/device performance requirement module 504 and/or a light weight engine 508.

For example, output from user/device performance requirement module 504 and/or a light weight engine 508 is provided to output/display module 506, where output/display module 506 provides a user experience on a wearable device.

Persons of ordinary skill in the art will appreciate that user/device performance requirement module 504 can include any suitable machine learning models that are well-known or widely available such as regression techniques, classification techniques, neural networks, and deep learning networks. For instance, user/device performance requirement module 504 can include neural networks such as Artificial Neural Network (ANN), Convolutional Neural Network (CNN), Recurrent Neural Network (RNN), Adversarial Network (GAN), Reinforcement Learning Model (RLM), Encoder/Decoder Networks, and/or Transformer-Based Models (e.g., Bidirectional Encoder Representations from Transformers (BERT), Generative Pre-trained Transformer (GPT), and/or a multimodal large language model (LLM)). Additionally or alternatively, persons of ordinary skill in the art will appreciate that user/device performance requirement module 504 can be any suitable non-learning processes such as rule-based systems, heuristics, decision trees, knowledge-based systems, statistical or stochastic systems, and expert systems.

In instances where user/device performance requirement module 504 is a machine-learning based model, the model may be trained to determine whether current usage of a wearable device by a user satisfies a user and/or device-specific performance requirement (e.g., visual and/or audio requirements) and implement a query response providing an instruction (to a user of the wearable device) to modify the wearable device if it is determined that current usage of a wearable device by a user does not satisfy a user and/or device-specific performance requirement.

In some embodiments, user/device performance requirement module 504 can be trained with both synthetic and non-synthetic data.

In some embodiments, user/device performance requirement module 504 can be deployed as one or more generative models, where content is automatically generated by one or more computers in response to a request to generate the content. The automatically-generated content is optionally generated on-device (e.g., generated at least in part by a computer system at which a request to generate the content is received) and/or generated off-device (e.g., generated at least in part by one or more nearby computers that are available via a local network or one or more computers that are available via the internet). This automatically-generated content optionally may include visual content (e.g., images, graphics, and/or video) and/or text content.

In some embodiments, novel automatically-generated content is referred to as generative content (e.g., generative images, generative graphics, generative video, and/or generative text). Generative content is typically generated based on a prompt input 510 to the user/device performance requirement module 504. Input module 502 optionally includes one or more pre-processing steps to adjust the input before it is used by an artificial intelligence (AI) model to generate an output image (e.g., adjustment to a user-provided prompt, creation of a system-generated prompt, and/or AI model selection). Display module 506 optionally includes one or more post-processing steps to adjust the output 512 by the user/device performance requirement module 504 (e.g., passing the AI model output to a different AI model, upscaling, downscaling, cropping, formatting, and/or adding or removing metadata) before the output 512 of the user/device performance requirement module 504 used for other purposes such as being provided to a different software process for further processing or being presented (e.g., visually) to a user.

A prompt input 510 for generating generative content can include one or more of: one or more words (e.g., a natural language prompt that is written or spoken), one or more images, one or more drawings, and/or one or more videos. Generative pre-trained transformer models are a type of LLM that can be effective at generating novel generative content based on a prompt input 510. In some embodiments, the user/device performance requirement module 504 uses a prompt input 510 that includes text to generate either different generative text, generative audio content, and/or generative visual content. In other embodiments, the user/device performance requirement module 504 uses a prompt input 510 that includes visual content and/or an audio content to generate generative text (e.g., a transcription of audio and/or a description of the visual content). In yet other embodiments, the user/device performance requirement module 504 uses a prompt input 510 that includes multiple types of content (e.g., text, images, audio, video, and/or other sensor data) to generate generative content. A prompt input 510 sometimes also includes values for one or more parameters indicating an importance of various parts of the prompt. Some prompt inputs 510 include a structured set of instructions that can be provided to the user/device performance requirement module 504 that include phrasing, a specified style, relevant context (e.g., starting point content and/or one or more examples), and/or a role for the user/device performance requirement module 504.

Generative content is generally based on the prompt but is not deterministically selected from pre-generated content and is, instead, generated using the prompt as a starting point. In some embodiments, pre-existing content (e.g., audio, text, and/or visual content) is used as part of the prompt for creating generative content (e.g., the pre-existing content is used as a starting point for creating the generative content). For example, a prompt input 510 could request that visual content be modified to include or exclude content specified by a prompt (e.g., removing an identified feature in the visual content, adding a feature to the visual content that is described in a prompt, changing a visual style of the visual content, and/or creating additional visual elements outside of a spatial or temporal boundary of the visual content that are based on the visual content). In some embodiments, a random or pseudo-random seed is used as part of the prompt input 510 for creating generative content (e.g., the random or pseudo-random seed content is used as a starting point for creating the generative content). For example, when generating an image from a diffusion model, a random noise pattern is iteratively denoised based on the prompt input 510 to generate an image. While specific types of user/device performance requirement module 504 have been described herein, it should be understood that a variety of a different user/device performance requirement module could be used to generate generative content based on a prompt.

In instances where user/device performance requirement module 504 is a non-learning system, performance requirement module 504 can use a pre-defined set of rules or a pre-defined structure to make decisions based on the inputs that the process sees. For example, the user/device performance requirement module 504 can be used to guide a deterministic approach to determine whether current use of device 500 (e.g., an HMD) by a user satisfies a performance requirement associated with, for example, user dependent/application-specific (e.g., a medical imaging application) display requirements and if the performance requirement has not been met, an instruction to change the device 500 and/or how it is used/worn may be issued.

Some embodiments described herein can include use of learning and/or non-learning-based process(es). The use can include collecting, pre-processing, encoding, labeling, organizing, analyzing, recommending and/or generating data. Entities that collect, share, and/or otherwise utilize user data should provide transparency and/or obtain user consent when collecting such data. The present disclosure recognizes that the use of the data in rule-based or machine learning (ML) based process(es) can be used to benefit users. For example, the data can be used to train models that can be deployed to improve performance, accuracy, and/or functionality of applications and/or services. Accordingly, the use of the data enables the rule-based process(es) or ML to adapt and/or optimize operations to provide more personalized, efficient, and/or enhanced user experiences. Such adaptation and/or optimization can include tailoring content, recommendations, and/or interactions to individual users, as well as streamlining processes, and/or enabling more intuitive interfaces. Further beneficial uses of the data in the rule-based process(es) can be used to are also contemplated by the present disclosure.

The present disclosure contemplates that, in some embodiments, data used by the rule-based process(es) can be used to include publicly available data. To protect user privacy, data may be anonymized, aggregated, and/or otherwise processed to remove or to the degree possible limit any individual identification. As discussed herein, entities that collect, share, and/or otherwise utilize such data should obtain user consent prior to and/or provide transparency when collecting such data. Furthermore, the present disclosure contemplates that the entities responsible for the use of data, including, but not limited to data used in association with the rule-based process(es), should attempt to comply with well-established privacy policies and/or privacy practices.

For example, such entities may implement and consistently follow policies and practices recognized as meeting or exceeding industry standards and regulatory requirements for developing and/or training ML-based process(es). In doing so, attempts should be made to ensure all intellectual property rights and privacy considerations are maintained. Training should include practices safeguarding training data, such as personal information, through sufficient protections against misuse or exploitation. Such policies and practices should cover all stages of the process(es) development, training, and use, including data collection, data preparation, model training, model evaluation, model deployment, and ongoing monitoring and maintenance. Transparency and accountability should be maintained throughout. Such policies should be easily accessible by users and should be updated as the collection and/or use of data changes. User data should be collected for legitimate and reasonable uses of the entity and not shared or sold outside of those legitimate uses. Further, such collection and sharing should occur through transparency with users and/or after receiving the informed consent of the users. Additionally, such entities should consider taking any needed steps for safeguarding and securing access to such data and ensuring that others with access to the data adhere to their privacy policies and procedures. Further, such entities should subject themselves to evaluation by third parties to certify, as appropriate for transparency purposes, their adherence to widely accepted privacy policies and practices. In addition, policies and/or practices should be adapted to the particular type of data being collected and/or accessed and tailored to a specific use case and applicable laws and standards, including jurisdiction-specific considerations.

In some embodiments, ML-based process(es) may utilize models that may be trained (e.g., supervised learning or unsupervised learning) using various training data, including data collected using a user device. Such use of user-collected data may be limited to operations on the user device. For example, the training of the model can be done locally on the user device so no part of the data is sent to another device. In other implementations, the training of the model can be performed using one or more other devices (e.g., server(s)) in addition to the user device but done in a privacy preserving manner, e.g., via multi-party computation as may be done cryptographically by secret sharing data or other means so that the user data is not leaked to the other devices.

In some embodiments, the trained model can be centrally stored on the user device or stored on multiple devices, e.g., as in federated learning. Such decentralized storage can similarly be done in a privacy preserving manner, e.g., via cryptographic operations where each piece of data is broken into shards such that no device alone (i.e., only collectively with another device(s)) or only the user device can reassemble or use the data. In this manner, a pattern of behavior of the user or the device may not be leaked, while taking advantage of increased computational resources of the other devices to train and execute the ML model. Accordingly, user-collected data can be protected. In some implementations, data from multiple devices can be combined in a privacy-preserving manner to train an ML model.

In some embodiments, the present disclosure contemplates that data used for user/device performance requirement module 504 may be kept strictly separated from platforms where the user/device performance requirement module 504 are deployed and/or used to interact with users and/or process data. In such embodiments, data used for offline training of the user/device performance requirement module 504 may be maintained in secured datastores with restricted access and/or not be retained beyond the duration necessary for training purposes. In some embodiments, the user/device performance requirement module 504 may utilize a local memory cache to store data temporarily during a user session. The local memory cache may be used to improve performance of the rule-based process(es). However, to protect user privacy, data stored in the local memory cache may be erased after the user session is completed. Any temporary caches of data used for online learning or inference may be promptly erased after processing. All data collection, transfer, and/or storage should use industry-standard encryption and/or secure communication.

In some embodiments, as noted above, techniques such as federated learning, differential privacy, secure hardware components, homomorphic encryption, and/or multi-party computation among other techniques may be utilized to further protect personal information data during ML training and/or use of rule-based process(es). The user/device performance requirement module 504 should be monitored for changes in underlying data distribution such as concept drift or data skew that can degrade performance of the user/device performance requirement module 504 over time.

In some embodiments, the user/device performance requirement module 504 are trained using a combination of offline and online training. Offline training can use curated datasets to establish baseline model performance, while online training can allow the user/device performance requirement module 504 to continually adapt and/or improve. The present disclosure recognizes the importance of maintaining strict data governance practices throughout this process to ensure user privacy is protected.

In some embodiments, the user/device performance requirement module 504 processes may be designed with safeguards to maintain adherence to originally intended purposes, even as the user/device performance requirement module 504 adapt based on new data. Any significant changes in data collection and/or applications of user/device performance requirement module 504 use may (and in some cases should) be transparently communicated to affected stakeholders and/or include obtaining user consent with respect to changes in how user data is collected and/or utilized.

Despite the foregoing, the present disclosure also contemplates embodiments in which users selectively restrict and/or block the use of and/or access to data. That is, the present disclosure contemplates that hardware and/or software elements can be provided to prevent or block access to data. For example, in the case of some services, the present technology should be configured to allow users to select to "opt in" or "opt out" of participation in the collection of data during registration for services or anytime thereafter. In another example, the present technology should be configured to allow users to select not to provide certain data for training the user/device performance requirement module 504 and/or for use as input during the inference stage of such systems. In yet another example, the present technology should be configured to allow users to be able to select to limit the length of time data is maintained or entirely prohibit the use of their data for use by the rule-based process(es). In addition to providing "opt in" and "opt out" options, the present disclosure contemplates providing notifications relating to the access or use of personal information. For instance, a user can be notified when their data is being input into the user/device performance requirement module 504 for training or inference purposes, and/or reminded when the user/device performance requirement module 504 generate outputs or make decisions based on their data.

The present disclosure recognizes user/device performance requirement module 504 should incorporate explicit restrictions and/or oversight to mitigate against risks that may be present even when such systems having been designed, developed, and/or operated according to industry best practices and standards. For example, outputs may be produced that could be considered erroneous, harmful, offensive, and/or biased; such outputs may not necessarily reflect the opinions or positions of the entities developing or deploying these systems. Furthermore, in some cases, references to or failures to cite third-party products and/or services in the outputs should not be construed as endorsements or affiliations by the entities providing the rule-based process(es). Generated content can be filtered for potentially inappropriate or dangerous material prior to being presented to users, while human oversight and/or ability to override or correct erroneous or undesirable outputs can be maintained as a failsafe.

The present disclosure further contemplates that users of the user/device performance requirement module 504 should refrain from using the services in any manner that infringes upon, misappropriates, or violates the rights of any party. Furthermore, the user/device performance requirement module 504 should not be used for any unlawful or illegal activity, nor to develop any application or use case that would commit or facilitate the commission of a crime, or other tortious, unlawful, or illegal act including misinformation, disinformation, misrepresentations (e.g., deepfakes), deception, impersonation, and propaganda. The user/device performance requirement module 504 should not violate, misappropriate, or infringe any copyrights, trademarks, rights of privacy and publicity, trade secrets, patents, or other proprietary or legal rights of any party, and appropriately attribute content as required. Further, the user/device performance requirement module 504 should not interfere with any security, digital signing, digital rights management, content protection, verification, or authentication mechanisms. The user/device performance requirement module 504 should not misrepresent machine-generated outputs as being human-generated.

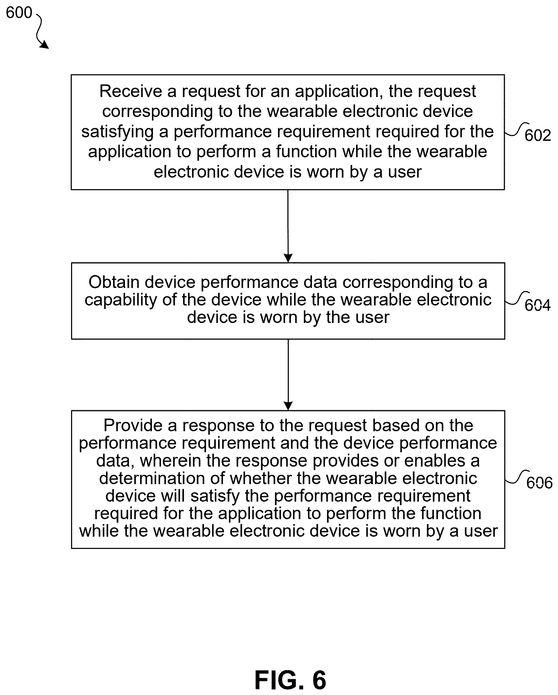

**Figure 6** is a flowchart representation of an exemplary method 600 that enables an application to query a wearable device such as an HMD to determine whether current usage of the HMD by a user satisfies a user and/or device specific performance requirement, in accordance with some implementations. In some implementations, the method 600 is performed by a wearable device such as wearable device 105 110 of figure 1. In some implementations, the wearable device has a screen for displaying images and/or a screen for viewing stereoscopic images such as a head-mounted display (an HMD such as e.g., device 105 of Figure 1), an OST-AR device, etc. In some implementations, the method 600 is performed by processing logic, including hardware, firmware, software, or a combination thereof. In some implementations, the method 600 is performed by a processor executing code stored in a non-transitory computer-readable medium (e.g., a memory). Each of the blocks in the method 600 may be enabled and executed in any order.

At block 602, the method 600 receives a request (for or from an application) corresponding to a wearable electronic device satisfying a user specific performance requirement required for the application to perform a function while the wearable electronic device is worn by a user. For example, an API 217 may enable an application(s) 226 to query an HMD to determine whether a current use (of the HMD) satisfies a set of performance requirements as described with respect to figure 2.

In some implementations, the request may correspond to the wearable electronic device satisfying the performance requirement with respect to functional requirements of the electronic device (e.g., display requirements).

In some implementations, the request may correspond to the wearable electronic device satisfying the performance requirement with respect to legal or regulatory regulations (e.g., FDA regulations).

In some implementations, the request may correspond to the wearable electronic device satisfying the performance requirement with respect to user dependent (e.g., positioning of user with respect to wearable electronic device) and application-specific requirements (e.g., FOV required for application). For example, an effective performance of the device may be user-specific based on, *inter alia,* enrollment of eye and/or hands of a user, active sensing of the eyes of user relative to a display of an electronic device (e.g., a FOV of the user provided by an HMD), etc.

In some implementations, the user dependent and application-specific requirements are related to a FOV, a distortion parameter, a chromatic aberration parameter, a sharpness parameter, a color performance parameter etc. required for use of the application.

At block 604, the method 600 obtains device performance data corresponding to user specific capability of the device while the wearable electronic device is worn by the user. For example, FOV, distortion, PPD, chromatic aberration, luminance, luminance uniformity, color, color uniformity, sharpness, contrast, virtual image distance, pupil position with respect to a wearable electronic device being worn by user 102 as described with respect to figures 1 and 2.

In some implementations, device performance data may provide positioning data related to a current position of the user relative to the electronic device.

In some implementations, the positioning data is determined using a model (e.g., a ray tracing model 400) to simulate how much light will propagate from a display of the wearable electronic device to at least one eye (e.g., a pupil) of the user as described with respect to figure 4.

In some implementations, the device performance data provides characteristics of the user such as, for example, whether the user is wearing glasses.

In some implementations, the device performance data is used to generate simulation data based on current device characteristics, current user characteristics, or a positional relationship between the electronic device and the user.

At block 606, the method 600 provides a response to the request based on the performance requirement and the device performance data. The response may provide or enable a determination of whether the wearable electronic device will satisfy the user specific performance requirement required for the application to perform the function while the wearable electronic device is worn by a user. For example, an API 217 may provide a detailed response indicating whether the performance requirements have been met and notification tools 214 may provide associated notification(s) 228 such as, for example, a pass/fail indication as described with respect to figure 2.

In some implementations, the response provides a graphical indicator (e.g., pass/fail, lighting, etc.) presenting the determination of whether the wearable electronic device will satisfy the performance requirement.

In some implementations, the response provides determined values related to current performance capabilities of the wearable electronic device.

In some implementations, the response provides a representation identifying whether a minimum performance parameter of the wearable device is available to the user without providing user characteristics related to an actual performance parameter of the wearable device. In some implementations, a performance parameter be, for example, a field of view (FOV) parameter, a distortion parameter, a chromatic aberration parameter, a sharpness parameter, a color performance parameter, etc.

In some implementations, the response is provided to the application for providing a notification to the user.

In some implementations, the response is provided to the application for preventing use of the application on the electronic device.

In some implementations, the response the response is provided to the application for allowing use of the application on the wearable electronic device.

In some implementations, the response the request is a query received via an application programming interface (API).

In some embodiments, method 600 is performed at a first computer system (e.g., an HMD such as electronic device 105 described herein) via a system process (e.g., an operating system process, a server system process, or another system-level service) that is different from one or more applications executing and/or installed on the first computer system.

In some embodiments, method 600 is performed at the first computer system by an application that is different from the system process. In some embodiments, instructions of the application, when executed, control the first computer system to perform method 600 by calling an application programming interface (API) provided by the system process. In some embodiments, the application performs at least a portion of method 600 without calling the API.

Implementations within the scope of the present disclosure can be partially or entirely realized using a tangible computer-readable storage medium (or multiple tangible computer-readable storage media of one or more types) encoding one or more computer-readable instructions. It should be recognized that computer-executable instructions can be organized in any format, including applications, widgets, processes, software, software modules and/or components.

Implementations within the scope of the present disclosure include a computer-readable storage medium that encodes instructions organized as an application that, when executed by one or more processing units, control an electronic device to perform the method of FIG. 6 and/or one or more other processes and/or methods described herein.

It should be recognized that the application can be any suitable type of application, including, for example, one or more of: a query application, a field of view (FOV) application, a browser application, an application that functions as an execution environment for plug-ins, widget, or other applications, a fitness application, a health application, a digital payments application, a media application, a social network application, a messaging application, and/or a maps application. In some embodiments, the application is an application configured to support operation of the HMD, including display testing, calibration, content rendering, accessibility modes, or device-control functions related to user dependent display performance operation.

In some embodiments, the application is pre-installed on the first computer system at purchase (e.g., a first-party application). In other embodiments, the application is provided to the first computer system via an operating system update file (e.g., a first-party application). In other embodiments, the application is provided via an application store. In some implementations, the application store is pre-installed on the first computer system at purchase (e.g., a first-party application store) and allows download of one or more applications. In some embodiments, the application store is a third-party application store (e.g., an application store that is provided by another device, downloaded via a network, and/or read from a storage device). In some embodiments, the application is a third-party application (e.g., an app provided by an application store, downloaded via a network, and/or read from a storage device). In some embodiments, the application controls the first computer system to perform method 600 by calling an application programming interface (API) provided by the system process using one or more parameters.

In some embodiments, at least one API is a software module (e.g., a collection of computer-readable instructions) that provides an interface allowing a different set of instructions (e.g., API-calling instructions of the application) to access and use one or more functions, methods, procedures, data structures, classes, and/or other services provided by a set of implementation instructions of the system process. The API can define one or more parameters that are passed between the API-calling instructions and the implementation instructions.

As described above, in some embodiments, the application controls the first computer system to perform method 600 by calling an application programming interface (API) provided by the system process using one or more parameters. For example, this may involve an application using a first API to provide a request to determine whether a current use (of the HMD) satisfies a set of performance requirements as recited in block 602 and using a second API to provide a response to the request based on the set of performance requirement and device performance data, for example, as described in block 606).

In some implementations an application uses an API, information to obtain information from a hardware component of the device, from a software module (e.g., set of instructions) of the device, and/or a hardware component external to the device (e.g., a peripheral device, an accessory device, a server, etc.). In some embodiments, the information obtained includes user information, environment information, electronic device state information, hardware information, motion information, medical testing information, real-time sensor information, training simulation information, high-precision application information, FOV information, or any other type of information relevant to the application.

In some embodiments, one or more steps of the method of 600 is performed in response to a trigger. In some embodiments, the trigger includes detection of an event, a notification received from the system, a user input, and/or a response to a call to an API provided by system.

In some embodiments, one or more steps of the method of FIG. 6 includes calling an API using one or more parameters defined by the API. In some embodiments, the one or more parameters include a constant, a key, a data structure, an object, an object class, a variable, a data type, a pointer, an array, a list or a pointer to a function or method, and/or another way to reference a data or other item to be passed via the API.

Some implementations utilize an API that is a software module that includes a set of one or more computer-executable instructions. In some embodiments, an API provides an interface that allows a different set of instructions (e.g., API calling instructions) to access and/or use one or more functions, methods, procedures, data structures, classes, and/or other services provided by implementation instructions of the system. For example, API-calling instructions can access a feature of implementation instructions through one or more API calls or invocations (e.g., embodied by a function or a method call) exposed by an API and can pass data and/or control information using one or more parameters via the API calls or invocations. In some embodiments, an API allows an application to use a service provided by a Software Development Kit (SDK) library. In other embodiments, application incorporates a call to a function or method provided by the SDK library and provided by an API or uses data types or objects defined in the SDK library and provided by an API. In some embodiments, API-calling instructions make an API call via an API to access and use a feature of implementation instructions that is specified by API. In such embodiments, implementation instructions can return a value via the API to the API-calling instructions in response to the API call. The value can report to application the capabilities or state of a hardware component of device (e.g., contrast information), including those related to aspects such as input capabilities and state, output capabilities and state, processing capability, power state, storage capacity and state, and/or communications capability. In some embodiments, an API is implemented in part by firmware, microcode, or other low level logic that executes in part on the hardware component.

In some embodiments, an API allows a developer of API-calling instructions (which can be a third-party developer) to leverage a feature provided by implementation instructions. In such embodiments, there can be one or more sets of API-calling instructions that communicate with implementation instructions. In some embodiments, an API allows multiple sets of API-calling instructions written in different programming languages to communicate with implementation instructions (e.g., API can include features for translating calls and returns between implementation instructions and API-calling instructions) while the API is implemented in terms of a specific programming language. In some embodiments, API-calling instructions call APIs from different providers such as a set of APIs from an OS provider, another set of APIs from a plug-in provider, and/or another set of APIs from another provider (e.g., the provider of a software library) or creator of the another set of APIs.

In some implementation, instructions are executed to return a value through an API in response to an API call from API-calling instructions. While an API defines the syntax and result of an API call (e.g., how to invoke the API call and what the API call does), an API might not reveal how implementation instructions accomplish the function specified by the API call. Various API calls may be transferred via the one or more application programming interfaces between API-calling instructions and implementation instructions. Transferring the API calls can include issuing, initiating, invoking, calling, receiving, returning, and/or responding to the function calls or messages. In other words, transferring can describe actions by either of API-calling instructions or implementation instructions. In some embodiments, a function call or other invocation of an API sends and/or receives one or more parameters through a parameter list or other structure.

In some embodiments, implementation instructions provide more than one API, each providing a different view of or with different aspects of functionality implemented by implementation instructions. For example, one API of implementation instructions can provide a first set of functions and can be exposed to third party developers, and another API of implementation instructions can be hidden (e.g., not exposed) and provide a subset of the first set of functions and also provide another set of functions, such as testing or debugging functions which are not in the first set of functions. In some embodiments, implementation instructions call one or more other components via an underlying API and thus be both a set of API calling instructions and a set of implementation instructions. It should be recognized that implementation instructions can include additional functions, methods, classes, data structures, and/or other features that are not specified through the API and are not available to the API calling instructions. It should also be recognized that API calling instructions can be on the same system as implementation instructions or can be located remotely and access implementation instructions using the API over a network. In some embodiments, implementation instructions, an API and/or API-calling instructions is stored in a machine-readable medium, which includes any mechanism for storing information in a form readable by a machine (e.g., a computer or other data processing system). For example, a machine-readable medium can include magnetic disks, optical disks, random access memory; read only memory, and/or flash memory devices.

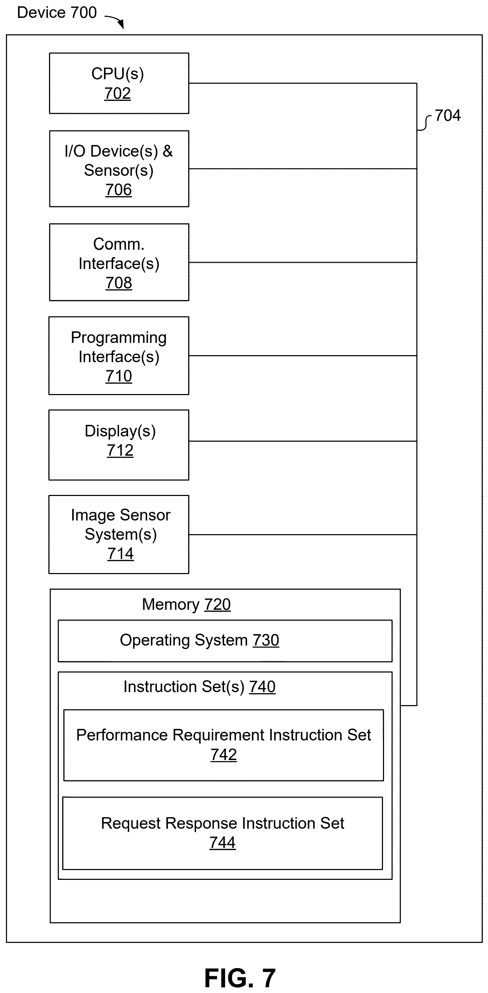

**Figure 7** is a block diagram of an example device 700. Device 700 illustrates an exemplary device configuration for electronic devices 105 and 110 of Figure 1. While certain specific features are illustrated, those skilled in the art will appreciate from the present disclosure that various other features have not been illustrated for the sake of brevity, and so as not to obscure more pertinent aspects of the implementations disclosed herein. To that end, as a non-limiting example, in some implementations the device 700 includes one or more processing units 702 (e.g., microprocessors, ASICs, FPGAs, GPUs, CPUs, processing cores, and/or the like), one or more input/output (I/O) devices and sensors 706, one or more communication interfaces 708 (e.g., USB, FIREWIRE, THUNDERBOLT, IEEE 802.3x, IEEE 802.11x, IEEE 802.16x, GSM, CDMA, TDMA, GPS, IR, BLUETOOTH, ZIGBEE, SPI, 12C, and/or the like type interface), one or more programming (e.g., I/O) interfaces 710, one or more displays 712, one or more interior and/or exterior facing image sensor systems 714, a memory 720, and one or more communication buses 704 for interconnecting these and various other components.

In some implementations, the one or more communication buses 704 include circuitry that interconnects and controls communications between system components. In some implementations, the one or more I/O devices and sensors 706 include at least one of an inertial measurement unit (IMU), an accelerometer, a magnetometer, a gyroscope, a thermometer, one or more physiological sensors (e.g., blood pressure monitor, heart rate monitor, blood oxygen sensor, blood glucose sensor, etc.), one or more microphones, one or more speakers, a haptics engine, one or more depth sensors (e.g., a structured light, a time-of-flight, or the like), and/or the like.

In some implementations, the one or more displays 712 are configured to present a view of a physical environment or a graphical environment to the user. In some implementations, the one or more displays 712 are configured to present content (determined based on a determined user/object location of the user within the physical environment) to the user. In some implementations, the one or more displays 712 correspond to holographic, digital light processing (DLP), liquid-crystal display (LCD), liquid-crystal on silicon (LCoS), organic light-emitting fieldeffect transitory (OLET), organic light-emitting diode (OLED), surface-conduction electron-emitter display (SED), field-emission display (FED), quantum-dot light-emitting diode (QD-LED), micro-electromechanical system (MEMS), and/or the like display types. In some implementations, the one or more displays 712 correspond to diffractive, reflective, polarized, holographic, etc. waveguide displays. In one example, the device 700 includes a single display. In another example, the device 700 includes a display for each eye of the user.

In some implementations, the one or more image sensor systems 714 are configured to obtain image data that corresponds to at least a portion of the physical environment 105. For example, the one or more image sensor systems 714 include one or more RGB cameras (e.g., with a complimentary metal-oxide-semiconductor (CMOS) image sensor or a charge-coupled device (CCD) image sensor), monochrome cameras, IR cameras, depth cameras, event-based cameras, and/or the like. In various implementations, the one or more image sensor systems 714 further include illumination sources that emit light, such as a flash. In various implementations, the one or more image sensor systems 714 further include an oncamera image signal processor (ISP) configured to execute a plurality of processing operations on the image data.

In some implementations, sensor data may be obtained by device(s) (e.g., devices 105 and 110 of Figure 1) during a scan of a room of a physical environment. The sensor data may include a 3D point cloud and a sequence of 2D images corresponding to captured views of the room during the scan of the room. In some implementations, the sensor data includes image data (e.g., from an RGB camera), depth data (e.g., a depth image from a depth camera), ambient light sensor data (e.g., from an ambient light sensor), and/or motion data from one or more motion sensors (e.g., accelerometers, gyroscopes, IMU, etc.). In some implementations, the sensor data includes visual inertial odometry (VIO) data determined based on image data. The 3D point cloud may provide semantic information about one or more elements of the room. The 3D point cloud may provide information about the positions and appearance of surface portions within the physical environment. In some implementations, the 3D point cloud is obtained over time, e.g., during a scan of the room, and the 3D point cloud may be updated, and updated versions of the 3D point cloud obtained over time. For example, a 3D representation may be obtained (and analyzed/processed) as it is updated/adjusted over time (e.g., as the user scans a room).

In some implementations, sensor data may be positioning information, some implementations include a VIO to determine equivalent odometry information using sequential camera images (e.g., light intensity image data) and motion data (e.g., acquired from the IMU/motion sensor) to estimate the distance traveled. Alternatively, some implementations of the present disclosure may include a simultaneous localization and mapping (SLAM) system (e.g., position sensors). The SLAM system may include a multidimensional (e.g., 3D) laser scanning and rangemeasuring system that is GPS independent and that provides real-time simultaneous location and mapping. The SLAM system may generate and manage data for a very accurate point cloud that results from reflections of laser scanning from objects in an environment. Movements of any of the points in the point cloud are accurately tracked over time, so that the SLAM system can maintain precise understanding of its location and orientation as it travels through an environment, using the points in the point cloud as reference points for the location.

In some implementations, the device 700 includes an eye tracking system for detecting eye position and eye movements (e.g., eye gaze detection). For example, an eye tracking system may include one or more infrared (IR) light-emitting diodes (LEDs), an eye tracking camera (e.g., near-IR (NIR) camera), and an illumination source (e.g., an NIR light source) that emits light (e.g., NIR light) towards the eyes of the user. Moreover, the illumination source of the device 700 may emit NIR light to illuminate the eyes of the user and the NIR camera may capture images of the eyes of the user. In some implementations, images captured by the eye tracking system may be analyzed to detect position and movements of the eyes of the user, or to detect other information about the eyes such as pupil dilation or pupil diameter. Moreover, the point of gaze estimated from the eye tracking images may enable gaze-based interaction with content shown on the neareye display of the device 700.

The memory 720 includes high-speed random-access memory, such as DRAM, SRAM, DDR RAM, or other random-access solid-state memory devices. In some implementations, the memory 720 includes non-volatile memory, such as one or more magnetic disk storage devices, optical disk storage devices, flash memory devices, or other non-volatile solid-state storage devices. The memory 720 optionally includes one or more storage devices remotely located from the one or more processing units 702. The memory 720 includes a non-transitory computer readable storage medium.

In some implementations, the memory 720 or the non-transitory computer readable storage medium of the memory 720 stores an optional operating system 730 and one or more instruction set(s) 740. The operating system 730 includes procedures for handling various basic system services and for performing hardware dependent tasks. In some implementations, the instruction set(s) 740 include executable software defined by binary information stored in the form of electrical charge. In some implementations, the instruction set(s) 740 are software that is executable by the one or more processing units 702 to carry out one or more of the techniques described herein.

The instruction set(s) 740 includes a performance requirement instruction set 742 and a request response instruction set 744. The instruction set(s) 740 may be embodied as a single software executable or multiple software executables.

The performance requirement instruction set 742 is configured with instructions executable by a processor to receive a request such as a query received via an API for an application to determine if a wearable electronic device satisfies a performance requirement required for an application to perform a function while a wearable electronic device is worn by a user.

The request response instruction set 744 is configured with instructions executable by a processor to provide a response to the request based on the performance requirement and device performance data.

Although the instruction set(s) 740 are shown as residing on a single device, it should be understood that in other implementations, any combination of the elements may be located in separate computing devices. Moreover, Figure 7 is intended more as functional description of the various features which are present in a particular implementation as opposed to a structural schematic of the implementations described herein. As recognized by those of ordinary skill in the art, items shown separately could be combined and some items could be separated. The actual number of instructions sets and how features are allocated among them may vary from one implementation to another and may depend in part on the particular combination of hardware, software, and/or firmware chosen for a particular implementation.

Implementations within the scope of the present disclosure can be partially or entirely realized using a tangible computer-readable storage medium (or multiple tangible computer-readable storage media of one or more types) encoding one or more computer-readable instructions. It should be recognized that computer-executable instructions can be organized in any suitable format, including applications, widgets, processes, software, software modules, and/or software components.

Implementations within the scope of the present disclosure include a computer-readable storage medium that encodes instructions organized as an application (e.g., instruction set(s) 740) that, when executed by one or more processing units (e.g., CPU 702 of device 700), control an electronic device (e.g., device 700 and/or device 105) to perform the method of Figure 6 and/or one or more other processes and/or methods described herein.

It should be recognized that instruction set(s) 740 can be any suitable type of application. For example, instruction set(s) 740 may include one or more of: a browser application; an application that functions as an execution environment for plug-ins, widgets, or other applications; a fitness application; device-specific performance requirement application, a health or medical application; a digital payments application; a media application; a social network application; a messaging application; a maps application; and/or an HMD-related application for display testing, calibration, rendering control, querying, providing FOV modes or accessibility optimization. In some embodiments, instruction set(s) 740 is pre-installed on device 700 at purchase (e.g., a first-party application). In other embodiments, instruction set(s) 740 is provided to device 700 via an operating system update file (e.g., a first-party application or a second-party application). In other embodiments, instruction set(s) 740 is provided via an application store. In some embodiments, the application store is pre-installed on device 700 at purchase (e.g., a first-party application store). In other embodiments, the application store is a third-party application store (e.g., provided by another entity, downloaded via a network, and/or read from a storage device).

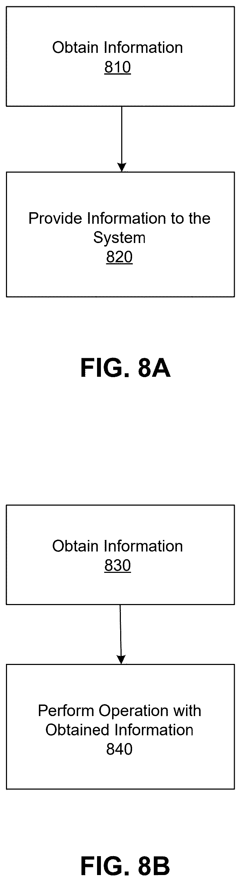

Referring to Figure 8A, instruction set(s) 740 (of figure 7) obtains information at step 810. In some embodiments, at step 810, information is obtained from at least one hardware component of the device (e.g., one or more I/O devices and sensors 706, one or more displays 712, and/or one or more image sensor systems 714 of device 700 of figure 7). In some embodiments, at step 810, information is obtained from at least one software module (e.g., a set of instructions stored in memory 720 and executable by processing unit(s) 702). In some embodiments, at step 810, information is obtained from at least one hardware component external to the device (e.g., a peripheral device, an accessory device, a calibration instrument, a server, etc.). In some embodiments, the information obtained at step 810 includes FOV information, query information, performance requirement information, positional information, time information, notification information, user information, environment information, electronic device state information, weather information, media information, historical information, event information, hardware information, and/or motion information. In some embodiments, in response to and/or after obtaining the information at step 810, instruction set(s) 740 provides the information to a system at step 820.

In some embodiments, the system is an operating system hosted on device 700 (e.g., operating system 730 stored in memory 720). In some embodiments, the system is implemented at an external device (e.g., a server, a peripheral device, an accessory, a personal computing device, etc.) that includes an operating system and/or system services.

Referring to Figure 8B, instruction set(s) 740 obtains information at step 830. In some embodiments, the information obtained at step 830 includes FOV information, query information, performance requirement information, positional information, time information, notification information, user information, environment information, electronic device state information, weather information, media information, historical information, event information, hardware information, and/or motion information. In response to and/or after obtaining the information at step 830, instruction set(s) 740 performs an operation with the information at step 840.

In some embodiments, the operation performed at step 840 includes: providing a notification based on the information; sending a message based on the information; displaying the information; controlling a user interface of a fitness application based on the information; controlling a user interface of a health application based on the information; controlling a focus mode based on the information; setting a reminder based on the information; adding a calendar entry based on the information; controlling a display mode (e.g., dark-mode or light-mode presentation) based on the information; repositioning displayed content within a field of view based on the information; adjusting rendering parameters; enabling visual fidelity API based FOV modes, performing queries, determining performance requirements and/or initiating an operation that affects HMD display output (e.g., FOV, brightness modulation, contrast optimization, or optical attenuation control) based on the information.

In some embodiments, one or more steps of the method of Figure 8A and/or the method of Figure 8B is performed in response to a trigger. In some embodiments, the trigger includes detection of an event, a notification received from the operating system 730, a user input, and/or a response to a call to an API provided by the operating system 730.

In some embodiments, the instructions of instruction set(s) 740, when executed, device 700 and/or device 105 to perform the method of Figure 8A and/or the method of Figure 8B by calling an application programming interface (API) provided by the operating system 1330 and/or another system service. In some embodiments, instruction set(s) 740 performs at least a portion of the method of Figure 8A and/or the method of Figure 8B without calling such an API.

In some embodiments, one or more steps of the method of Figure 8A and/or the method of Figure 8B includes calling an API using one or more parameters defined by the API. In some embodiments, the one or more parameters include a constant, a key, a data structure, an object, an object class, a variable, a data type, a pointer, an array, a list, a pointer to a function or method, and/or another way to reference a data or other item to be passed via the API.

In some embodiments, instruction set(s) 740 includes application implementation instructions and API-calling instructions stored in memory 720 as part of instruction set(s) 740 and executable by processing unit(s) 702. In some embodiments, the application implementation instructions correspond to one or more operations performed by instruction set(s) 740, including operations for adjusting rendering parameters, enabling visual fidelity API based FOV modes, performing queries, determining performance requirements generating or selecting luminance patterns, obtaining photometric or sensor measurements, generating contrast maps, estimating optical scatter and/or veiling luminance contributions, and determining display-control actions based on measured or predicted contrast variations. In some embodiments, the API-calling instructions enable communication with operating system 730 and/or other system services.

In some embodiments, an API provides an interface that allows instruction set(s) 740 to access and/or use one or more functions, methods, procedures, data structures, classes, and/or other services provided by operating system 730 and/or other system software. For example, instruction set(s) 740 may invoke an API to obtain sensor data, query device state, control a user interface element, modify a rendering parameter, request a display mode change, or provide contrast-map information for system-level display optimization. In some embodiments, a returned value from the API indicates capabilities or state of a hardware component, including input capabilities and state, output capabilities and state, processing capability, power state, storage capacity and state, and/or communications capability.

Examples of such APIs can include one or more of: a query API, an FOV API, a pairing API, a device detection API, a payment API, a user-interface API, a location detection API, a maps API, a health sensor API, a sensor API, a messaging API, a push notification API, a streaming API, a collaboration API, a video conferencing API, an application store API, an advertising services API, a web browser API, a vehicle API, a networking API, a Wi-Fi API, a Bluetooth API, an NFC API, a UWB API, a fitness API, a smart home API, a contact transfer API, a photos API, a camera API, and/or an image processing API. In some embodiments, a sensor API provides access to raw sensor data and/or data derived from raw sensor data, including temperature data, image data, video data, audio data, heart rate data, IMU data, LiDAR data, location data, GPS data, camera data, ambient light data, and/or eye-tracking data.

In some embodiments, system software (e.g., operating system 730 and/or other system services) performs an operation in response to receiving an API call from instruction set(s) 740 and provides an API response as a result of processing the API call. While an API may define the syntax and result of an API call (e.g., how to invoke the API call and what the API call does), the API may not reveal how the system software accomplishes the function specified by the API call. In some embodiments, the operating system 1330, system services, and/or application 1360 are stored in a machine-readable medium, which includes any mechanism for storing information in a form readable by a machine, including magnetic disks, optical disks, RAM, ROM, and/or flash memory devices.

In some embodiments, exemplary APIs provided by operating system 730 and/or associated system services include one or more of: a query API, an FOV API, a pairing API (e.g., for establishing a secure connection with an accessory device), a device detection API (e.g., for locating nearby electronic devices such as media devices or smartphones), a payment API, a user-interface API (e.g., UIKit-type frameworks for generating graphical user interfaces), a location detection API, a locator API, a maps API, a health sensor API, a general sensor API, a messaging API, a push notification API, a streaming API, a collaboration API, a video conferencing API, an application store API, an advertising services API, a web browser API (e.g., a WebKit-type API), a vehicle API, a networking API, a Wi-Fi API, a Bluetooth API, an NFC API, a UWB API, a fitness API, a smart home API, a contact transfer API, a photos API, a camera API, and/or an image processing API.

In some embodiments, one or more APIs provided by operating system 730 define API calls accessible via API-calling instructions of instruction set(s) 740. The definition of an API call may specify one or more call parameters including, for example, authentication credentials, device identifiers, sensor configuration parameters, display configuration parameters, environmental or contextual metadata, user-preference data, calibration inputs, timing parameters, rendering control variables, communication protocol identifiers, data format specifications, or other structured inputs suitable for invoking system services.

In some embodiments, an API call response provided to instruction set(s) 740 includes one or more response elements such as processed sensor data, device state information, capability indicators, confirmation of requested operations, calibration results, display optimization parameters, rendering control outputs, diagnostic information, error codes, or derived analytical results (e.g., contrast metrics, luminance characteristics, or environmental context determinations). Such responses may be used by instruction set(s) 740 to adapt device behavior, refine display output, or initiate subsequent processing operations.

In some embodiments, a set of implementation instructions corresponding to operating system 730 and/or other system services comprises a system software module including computer-readable instructions configured to perform an operation in response to receiving an API call. The implementation instructions may generate an API response based on processing of the API call. In some embodiments, the implementation instructions are stored within device 700 and executed locally. In other embodiments, the implementation instructions are located on a separate electronic device (e.g., a server, accessory device, or distributed computing system) communicatively coupled to device 700 and configured to provide system services accessible through the API.

Those of ordinary skill in the art will appreciate that well-known systems, methods, components, devices, and circuits have not been described in exhaustive detail so as not to obscure more pertinent aspects of the example implementations described herein. Moreover, other effective aspects and/or variants do not include all of the specific details described herein. Thus, several details are described in order to provide a thorough understanding of the example aspects as shown in the drawings. Moreover, the drawings merely show some example embodiments of the present disclosure and are therefore not to be considered limiting.

While this specification contains many specific implementation details, these should not be construed as limitations on the scope of any inventions or of what may be claimed, but rather as descriptions of features specific to particular embodiments of particular inventions. Certain features that are described in this specification in the context of separate embodiments can also be implemented in combination in a single embodiment. Conversely, various features that are described in the context of a single embodiment can also be implemented in multiple embodiments separately or in any suitable subcombination. Moreover, although features may be described above as acting in certain combinations and even initially claimed as such, one or more features from a claimed combination can in some cases be excised from the combination, and the claimed combination may be directed to a subcombination or variation of a subcombination.

Similarly, while operations are depicted in the drawings in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system components in the embodiments described above should not be understood as requiring such separation in all embodiments, and it should be understood that the described program components and systems can generally be integrated together in a single software product or packaged into multiple software products.

Thus, particular embodiments of the subject matter have been described. Other embodiments are within the scope of the following claims. In some cases, the actions recited in the claims can be performed in a different order and still achieve desirable results. In addition, the processes depicted in the accompanying figures do not necessarily require the particular order shown, or sequential order, to achieve desirable results. In certain implementations, multitasking and parallel processing may be advantageous.

Embodiments of the subject matter and the operations described in this specification can be implemented in digital electronic circuitry, or in computer software, firmware, or hardware, including the structures disclosed in this specification and their structural equivalents, or in combinations of one or more of them. Embodiments of the subject matter described in this specification can be implemented as one or more computer programs, e.g., one or more modules of computer program instructions, encoded on computer storage medium for execution by, or to control the operation of, data processing apparatus. Alternatively, or additionally, the program instructions can be encoded on an artificially generated propagated signal, e.g., a machine-generated electrical, optical, or electromagnetic signal, that is generated to encode information for transmission to suitable receiver apparatus for execution by a data processing apparatus. A computer storage medium can be, or be included in, a computer-readable storage device, a computer-readable storage substrate, a random or serial access memory array or device, or a combination of one or more of them. Moreover, while a computer storage medium is not a propagated signal, a computer storage medium can be a source or destination of computer program instructions encoded in an artificially generated propagated signal. The computer storage medium can also be, or be included in, one or more separate physical components or media (e.g., multiple CDs, disks, or other storage devices).

The term "data processing apparatus" encompasses all kinds of apparatus, devices, and machines for processing data, including by way of example a programmable processor, a computer, a system on a chip, or multiple ones, or combinations, of the foregoing. The apparatus can include special purpose logic circuitry, e.g., an FPGA (field programmable gate array) or an ASIC (application specific integrated circuit). The apparatus can also include, in addition to hardware, code that creates an execution environment for the computer program in question, e.g., code that constitutes processor firmware, a protocol stack, a database management system, an operating system, a cross-platform runtime environment, a virtual machine, or a combination of one or more of them. The apparatus and execution environment can realize various different computing model infrastructures, such as web services, distributed computing and grid computing infrastructures. Unless specifically stated otherwise, it is appreciated that throughout this specification discussions utilizing the terms such as "processing," "computing," "calculating," "determining," and "identifying" or the like refer to actions or processes of a computing device, such as one or more computers or a similar electronic computing device or devices, that manipulate or transform data represented as physical electronic or magnetic quantities within memories, registers, or other information storage devices, transmission devices, or display devices of the computing platform.

The system or systems discussed herein are not limited to any particular hardware architecture or configuration. A computing device can include any suitable arrangement of components that provides a result conditioned on one or more inputs. Suitable computing devices include multipurpose microprocessorbased computer systems accessing stored software that programs or configures the computing system from a general purpose computing apparatus to a specialized computing apparatus implementing one or more implementations of the present subject matter. Any suitable programming, scripting, or other type of language or combinations of languages may be used to implement the teachings contained herein in software to be used in programming or configuring a computing device.

Implementations of the methods disclosed herein may be performed in the operation of such computing devices. The order of the blocks presented in the examples above can be varied for example, blocks can be re-ordered, combined, and/or broken into sub-blocks. Certain blocks or processes can be performed in parallel. The operations described in this specification can be implemented as operations performed by a data processing apparatus on data stored on one or more computer-readable storage devices or received from other sources.

The use of "adapted to" or "configured to" herein is meant as open and inclusive language that does not foreclose devices adapted to or configured to perform additional tasks or steps. Additionally, the use of "based on" is meant to be open and inclusive, in that a process, step, calculation, or other action "based on" one or more recited conditions or values may, in practice, be based on additional conditions or value beyond those recited. Headings, lists, and numbering included herein are for ease of explanation only and are not meant to be limiting.

It will also be understood that, although the terms "first," "second," etc. may be used herein to describe various elements, these elements should not be limited by these terms. These terms are only used to distinguish one element from another. For example, a first node could be termed a second node, and, similarly, a second node could be termed a first node, which changing the meaning of the description, so long as all occurrences of the "first node" are renamed consistently and all occurrences of the "second node" are renamed consistently. The first node and the second node are both nodes, but they are not the same node.

The terminology used herein is for the purpose of describing particular implementations only and is not intended to be limiting of the claims. As used in the description of the implementations and the appended claims, the singular forms "a," "an," and "the" are intended to include the plural forms as well, unless the context clearly indicates otherwise. It will also be understood that the term "and/or" as used herein refers to and encompasses any and all possible combinations of one or more of the associated listed items. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

As used herein, the term "if" may be construed to mean "when" or "upon" or "in response to determining" or "in accordance with a determination" or "in response to detecting," that a stated condition precedent is true, depending on the context. Similarly, the phrase "if it is determined [that a stated condition precedent is true]" or "if [a stated condition precedent is true]" or "when [a stated condition precedent is true]" may be construed to mean "upon determining" or "in response to determining" or "in accordance with a determination" or "upon detecting" or "in response to detecting" that the stated condition precedent is true, depending on the context.

Exemplary embodiments of the present disclosure are set out in the following items:
1. A method comprising:
   at a wearable electronic device having a processor:
   receiving a request for an application, the request corresponding to the wearable electronic device satisfying a performance requirement required for the application to perform a function while the wearable electronic device is worn by a user;
   obtaining device performance data corresponding to a capability of the device while the wearable electronic device is worn by the user; and
   providing a response to the request based on the performance requirement and the device performance data, wherein the response provides or enables a determination of whether the wearable electronic device will satisfy the performance requirement required for the application to perform the function while the wearable electronic device is worn by a user.
2. The method of item 1, wherein said device performance data provides positioning data related to a current position of the user relative to the wearable electronic device.
3. The method of item 2, wherein the positioning data is determined using a model to simulate how much light will propagate from a display of the wearable electronic device to at least one eye of the user.
4. The method of any of items 1-3, wherein the device performance data provides characteristics of the user.
5. The method of any of items 1-4, wherein the device performance data is used to generate simulation data based on current device characteristics, current user characteristics, or a positional relationship between the wearable electronic device and the user.
6. The method of any of items 1-5, wherein the response provides a graphical indicator presenting the determination of whether the wearable electronic device will satisfy the performance requirement.
7. The method of any of items 1-6, wherein the response provides determined values related to current performance capabilities of the wearable electronic device.
8. The method of any of items 1-7, wherein the response provides a representation identifying whether a minimum performance parameter is available to the user without providing user characteristics related to an actual performance parameter.
9. The method of item 8, wherein the minimum performance parameter and the actual performance parameter each comprise a parameter selected from the group consisting of a field of view (FOV) parameter, a distortion parameter, a chromatic aberration parameter, a sharpness parameter, and a color performance parameter.
10. The method of any of items 1-9, wherein the response is provided to the application for providing a notification to the user.
11. The method of any of items 1-10, wherein the response is provided to the application for preventing use of the application on the wearable electronic device.
12. The method of any of items 1-11, wherein the response is provided to the application for allowing use of the application on the wearable electronic device.
13. The method of any of items 1-12, wherein the request is a query received via an application programming interface (API).
14. The method of any of items 1-13, wherein the request corresponds to the wearable electronic device satisfying the performance requirement with respect to functional requirements of the wearable electronic device.
15. The method of any of items 1-14, wherein the request corresponds to the wearable electronic device satisfying the performance requirement with respect to legal regulations.
16. The method of any of items 1-15, wherein the request corresponds to the wearable electronic device satisfying the performance requirement with respect to user dependent and application-specific requirements.
17. The method of item 16, wherein the user dependent and application-specific requirements are related to a FOV parameter, a distortion parameter, a chromatic aberration parameter, a sharpness parameter, or a color performance parameter required for use of the application.
18. A wearable device comprising:
   a non-transitory computer-readable storage medium; and
   one or more processors coupled to the non-transitory computer-readable storage medium, wherein the non-transitory computer-readable storage medium comprises program instructions that, when executed on the one or more processors, cause the wearable device to perform operations comprising:
      receiving a request for an application, the request corresponding to the wearable electronic device satisfying a performance requirement required for the application to perform a function while the wearable electronic device is worn by a user;
      obtaining device performance data corresponding to a capability of the device while the wearable electronic device is worn by the user; and
      providing a response to the request based on the performance requirement and the device performance data, wherein the response provides or enables a determination of whether the wearable electronic device will satisfy the performance requirement required for the application to perform the function while the wearable electronic device is worn by a user.
19. The wearable device of item 18, wherein said device performance data provides positioning data related to a current position of the user relative to the wearable electronic device.
20. A computer-readable storage medium, e.g. non-transitory, storing program instructions executable by one or more processors to perform operations comprising:
   at a wearable electronic device having a processor:
   receiving a request for an application, the request corresponding to the wearable electronic device satisfying a performance requirement required for the application to perform a function while the wearable electronic device is worn by a user;
   obtaining device performance data corresponding to a capability of the device while the wearable electronic device is worn by the user; and
   providing a response to the request based on the performance requirement and the device performance data, wherein the response provides or enables a determination of whether the wearable electronic device will satisfy the performance requirement required for the application to perform the function while the wearable electronic device is worn by a user.

## Claims

1. A method comprising:
at a wearable electronic device having a processor:
receiving a request for an application, the request corresponding to the wearable electronic device satisfying a performance requirement required for the application to perform a function while the wearable electronic device is worn by a user;
obtaining device performance data corresponding to a capability of the device while the wearable electronic device is worn by the user; and
providing a response to the request based on the performance requirement and the device performance data, wherein the response provides or enables a determination of whether the wearable electronic device will satisfy the performance requirement required for the application to perform the function while the wearable electronic device is worn by a user.

2. The method of claim 1, wherein said device performance data provides positioning data related to a current position of the user relative to the wearable electronic device.

3. The method of claim 2, wherein the positioning data is determined using a model to simulate how much light will propagate from a display of the wearable electronic device to at least one eye of the user.

4. The method of any of claims 1-3, wherein the device performance data provides characteristics of the user.

5. The method of any of claims 1-4, wherein the device performance data is used to generate simulation data based on current device characteristics, current user characteristics, or a positional relationship between the wearable electronic device and the user.

6. The method of any of claims 1-5, wherein the response provides a graphical indicator presenting the determination of whether the wearable electronic device will satisfy the performance requirement.

7. The method of any of claims 1-6, wherein the response provides determined values related to current performance capabilities of the wearable electronic device.

8. The method of any of claims 1-7, wherein the response provides a representation identifying whether a minimum performance parameter is available to the user without providing user characteristics related to an actual performance parameter.

9. The method of claim 8, wherein the minimum performance parameter and the actual performance parameter each comprise a parameter selected from the group consisting of a field of view (FOV) parameter, a distortion parameter, a chromatic aberration parameter, a sharpness parameter, and a color performance parameter.

10. The method of any of claims 1-9, wherein the response is provided to the application for providing a notification to the user, preventing use of the application on the wearable electronic device, or allowing use of the application on the wearable electronic device.

11. The method of any of claims 1-10, wherein the request is a query received via an application programming interface (API).

12. The method of any of claims 1-11, wherein the request corresponds to the wearable electronic device satisfying the performance requirement with respect to: functional requirements of the wearable electronic device, legal regulations, or user dependent and application-specific requirements.

13. The method of claim 12, wherein the user dependent and application-specific requirements are related to a FOV parameter, a distortion parameter, a chromatic aberration parameter, a sharpness parameter, or a color performance parameter required for use of the application.

14. A system comprising:
a processor;
a computer readable medium storing instructions that when executed by the processor cause the processor to perform operations comprising any one of the methods of claims 1-13.

15. A non-transitory computer-readable medium comprising instructions that when executed by a processor cause the processor to perform operations comprising any one of the methods of claims 1-13.
